# EUROPEAN PATENT SPECIFICATION

(11) **EP 3 261 888 B1**
(45) Date of publication and mention of the grant of the patent: **10.11.2021**
(21) Application number: 16727221.0
(22) Date of filing: 23.02.2016
(51) Int. Cl.: B60T 13/26, B60T 13/68

(54) **BRAKE VALVE ARRANGEMENT**
BREMSVENTILBAUGRUPPE
AGENCEMENT DE VALVE DE FREINAGE

(30) Priority: 23.02.2015 GB 201502970
(43) Date of publication of application: 03.01.2018
(73) Proprietor: KNORR-BREMSE Systeme für Nutzfahrzeuge GmbH, 80809 München (DE)
(72) Inventor: FRY, Matthew, 80809 München (DE); MEDERER, Martin, 80809 München (DE); LUGMAYR, Markus, 80809 München (DE); SZABOLCS, Sovago, 80809 München (DE)
(74) Representative: Moore, David Simon
(86) International application number: PCT/IB2016/000588
(87) International publication number: WO 2016/135567

(56) References cited:
- WO-A1-2004/076254
- DE-A1-102007 002 020
- DE-A1-102008 014 458
- DE-B3-102005 019 479

## Description

The present arrangement relates to a brake valve arrangement in particular, but not exclusively, for a trailer vehicle or agricultural vehicle.

Existing trailer brake system valve arrangements are known from, for example, WO03011664 which discloses brakes of the front axle of the trailer of a utility vehicle are impinged upon with a brake pressure by way of a single, common ABS valve. Said ABS valve is electrically actuated by an EBS module associated with the rear wheel brakes depending on a differential slip between the front axle and the rear axle.

DE 10 2008 014 458 A1 discloses a brake valve arrangement for use in a trailer electronic braking system comprising a pressure control module controllable by an electronic control unit, having a main supply of pneumatic pressure and a reservoir.

GB2499459 discloses a further brake system comprises a braking device capable of generating a braking force on a wheel on the trailer, a brake force into the brake cylinders being controllable by a braking ECU. The braking ECU is connected to a standards compliant communication bus on said trailer and is adapted to receive data inputs from sensors on the trailer. An interface to trailer electronics and a communications interface are also provided. The brake system is further adapted to transmit a trailer identifier such as an SSID, such that the trailer identifier can be paired with a further device, such as a mobile telephone associated with a tractor driver, the further device having previously been provided with the trailer identifier. As braking systems become more sophisticated and have additional functionality such as that described in GB2499459 or levelling control, the cost of the brake system tends to increase. An additional problem is that there is increasing pressure on space on trailers due to this functionality as the additional functionality requires additional electrical and pneumatic connections for which there is little space. Trailer builders in addition do not wish to redesign the trailer if this is avoidable and so the compromises in the known systems have been perceived to have a lower reliability due to the additional external connections.

EP2121359 describes a valve adapted to provide additional raise/lower functionality to a known braking system. Although the valve disclosed in this patent provides the required raise lower functionality, its inclusion with known brake systems results in additional cost and space requirements on the trailer.

A particular problem arises with the inclusion of raise/lower functionality on a trailer with park-manoeuvring functionality. Typically in known solutions each of these will be provided with separate buttons for raising or lowering the height of the trailer and for parking and manoeuvring the trailer. The space for the buttons and the associated pneumatic connections is sufficiently large that in many cases the trailer would need to be redesigned if both options are specified.

The present invention therefore seeks to provide an arrangement that is more compact and lower cost.

According to the invention there is provided a brake valve arrangement for use in a trailer or agricultural electronic braking system comprising a pressure control module controllable by an electronic control unit, having a main supply of pneumatic pressure and a reservoir, the braking system having a main air supply and an air reservoir, wherein the valve arrangement comprises a park valve having pneumatic connections to the main supply, reservoir and pressure control module, which valve is provided with a first actuator for actuating the raising and lowering of the trailer height and a second actuator for controlling parking and manoeuvring functions.

The solution of the invention advantageously enables the inclusion of a high level of functionality in the same footprint as existing designs. The design also reduces the installation complexity and installation time thereby resulting in a reduced installed cost compared to the same functionality. The integration of the park valve, overflow components and raise/lower functionality into a single package provides for increased functionality within the same space as known designs.

Exemplary embodiments of the invention will now be described in greater detail with reference to the drawings in which:
Fig. 1 shows a pneumatic arrangement of a known trailer braking system
Fig. 2 shows a pneumatic arrangement of a braking system of the invention
Fig. 3 shows a pneumatic arrangement of a first variant of the valve;
Fig. 4 shows a pneumatic arrangement of a second variant
Fig. 5 shows a pneumatic arrangement of a third variant
Fig. 6 shows a view of the first variant park valve operating elements
Fig. 7 shows a view of the second variant park valve operating elements
Fig. 8 shows a view of the third variant park valve operating elements

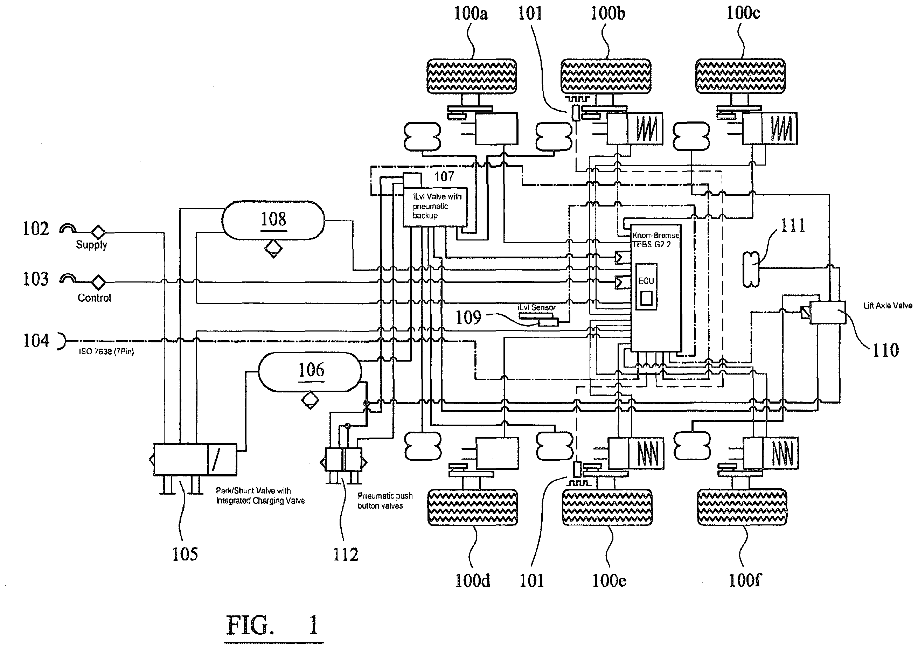

Figure 1 shows a known trailer braking system with levelling control and lift axle control. A conventional utility vehicle full trailer has a steerable front axle with front wheels and three rear axles with rear wheels 100a-f. Rotational wheel speed sensors 101 are in each case assigned to the left wheels and the right wheels and are connected by way of electric lines with an electropneumatic brake pressure control module which is primarily assigned to the rear axle brakes. One brake is in each case assigned to the left wheels and to the right wheels, which brakes can be applied by means of brake cylinders of the front axle or spring-loaded brake cylinders of the rear axle.

The braking system of the trailer vehicle can be connected by way of three connections, specifically a pneumatic supply line connection 102, a pneumatic control line connection 103 and an electric control connection 104, with the braking system of a tractor or a further trailer. The electric control line is a seven pin ISO 7638 connection, which provides the ISO 11992 CAN data connection on pins 6 and 7. The supply line connection is connected by way of a park shunt valve 105 with an air brake reservoir 106. From the air brake reservoir, a pneumatic line leads to a supply input of the pressure control module/ECU. The pressure control module is provided with an integral electronic control unit.

Furthermore, pneumatic axle load sensors or air bellows are provided at the rear axle and permit a determination of the axle load, particularly of the dynamic axle load during braking and starting. The axle load sensors or air bellows are connected by way of pneumatic lines with the levelling control.

To provide stability control a lateral acceleration sensor is provided, which may also be integrated with a yaw sensor, and the output of the lateral acceleration sensor is fed to the pressure control module/ECU. Typically the lateral acceleration sensor is integrated into the pressure control module/ECU. In the event that lateral acceleration on the trailer is detected, the pressure control module can provide for increased brake force at the front and/or rear axles. When the lateral acceleration sensor detects lateral acceleration on the trailer in which it is installed, the sensor generates a signal setting the stability control to active.

To provide levelling control, a levelling control valve 107 is provided. Due to the additional air use required in levelling control a second reservoir 108 connected to the supply is provided, which is pneumatically connected to the levelling control valve 107. The levelling control valve is further pneumatically connected to each of the air bags and controls the flow of air into and exhaust of air from the air bags.

The levelling control valve is provided with pneumatic control inputs from push buttons on a push button valve 112, the air for which is supplied by the reservoir 106. Further electrical and pneumatic control is provided from the pressure control module/electronic control unit. A levelling sensor 109 to determine the height of the trailer is electrically connected to the pressure control module/ECU.

A lift axle control valve 110 is provided, which is supplied with air from the additional reservoir and has a further pneumatic connection with the levelling control valve and a further airbag 111. An electrical connection to the pressure control module/ECU provides the control for the lift axle solenoid.

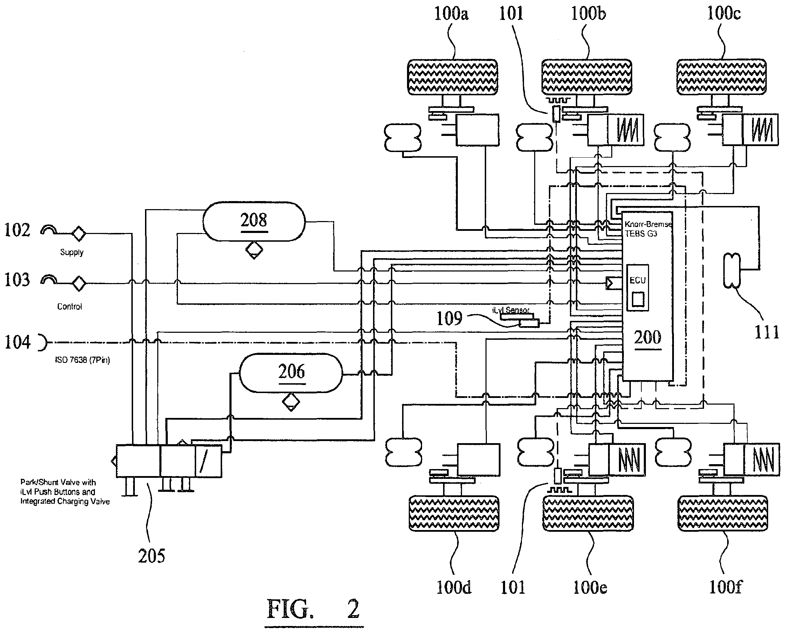

Figure 2 shows a pneumatic arrangement according to the invention. As with the arrangement the utility vehicle full trailer has three rear axles with rear wheels 100a-f.

Rotational wheel speed sensors 101 are in each case assigned to the left wheels and the right wheels and are connected by way of electric lines with an electropneumatic brake pressure control module/ECU 200 which is primarily assigned to the rear axle brakes. One brake is in each case assigned to the left wheels and the right wheels, which brake can be applied by means of brake cylinders of the front axle or spring-loaded brake cylinders of the rear axle.

The braking system of the trailer vehicle can be connected by way of three connections, specifically a pneumatic supply line connection 102, a pneumatic control line connection 103 and an electric control connection 104, with the braking system of a tractor or a further trailer. The electric control line is a seven pin ISO 7638 connection, which provides the ISO 11992 CAN data connection on pins 6 and 7.

The supply line connection is connected by way of a park shunt valve with push button controls 205 with a first air brake reservoir 206 and a second reservoir 208. From the air brake reservoir 206, a pneumatic line leads to a supply input of the pressure control module/ECU. The second reservoir 208 is provided with first and second pneumatic inputs to the pressure control module/ECU. Further two pneumatic inputs are provided directly from the park shunt valve with push buttons and charging valve 205 to the pressure control module/ECU 200. The pressure control module is provided with an integral electronic control unit. The reservoir is provided with first and second pneumatic connections with the pressure control module/ECU to provide additional air flow capacity to the inlet ports 11 and 12 for the relay valves.

Furthermore, pneumatic axle load sensors or air bellows are provided at the rear axle and permit a determination of the axle load, particularly of the dynamic axle load during braking and starting. The axle load sensors or air bellows are connected by way of pneumatic lines with the pressure control module. The air bag for the lift axle control is also directly controlled from the pressure control module/ECU 200.

To provide levelling control, a levelling control sensor 109 is provided, the output of which is fed to the pressure control module/ECU. In use, the pressure control module/ECU 200 then controls the flow of air into the air bags to raise and lower the trailer in accordance with the user inputs from the push buttons or alternatively in accordance with any instructions received from a remote device via the CAN bus.

As can be readily visible from Figure 2, the arrangement of the invention results in greatly simplified pneumatic and electrical connections compared with the known approach.

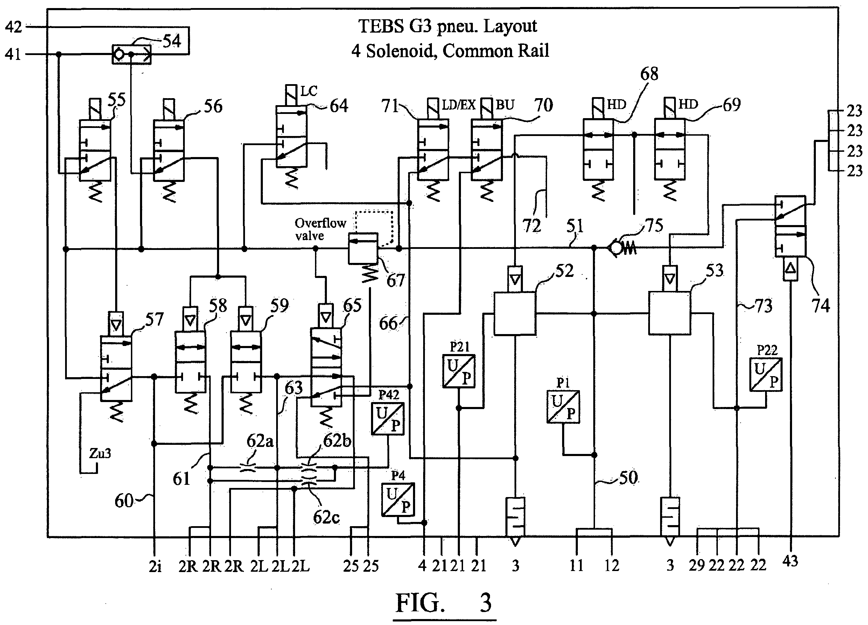

Figure 3 shows a pneumatic arrangement of the brake valve having two modulators. The valve arrangement is provided with a pneumatic input via the ports 11 and 12, which are connected to the trailer reservoir (not shown) to enable air flow into the valve. The inlet ports 11 and 12 are connected to conduit 50, which leads to a common rail conduit 51. The conduit 50 is also pneumatically connected to EBS relay valves 52, 53 and well as pressure transducer P1, which measures the pressure on the inlet conduit to provide a control signal for the valve control electronics.

The pneumatic arrangement controls the levelling function, the lift axle and the electronic braking system. The solenoids operable to control these functions are each connected to the common rail conduit 51.

The levelling control is provided with an air suspension raise input 41 in pneumatic connection with a first solenoid 55 and an air suspension lower input 42 which is in pneumatic connection with the raise input 41 and the first solenoid 55 via a check valve 54. The check valve 54 is also connected with a second solenoid 56. The raise and lower solenoids are connected with the common rail 51. The first solenoid 55 is connected to the pilot input of the levelling exhaust valve 57, which exhaust is further in pneumatic connection with the common rail 51.

The second valve 56 is connected to the control ports of first levelling hold valve 58 and second levelling hold valve 59. The first and second levelling hold valves are connected to a conduit 60 in communication with port 2i, which is the suspension control by an external valve for two point levelling control. The conduit 60 is connected to the exhaust valve 57 to enable the hold valves 58 and 59 to be exhausted via valve 57.

Each of the hold valves is connected to a respective two air suspension bellows on the trailer 2R and 2L. Thus the first hold valve 58 controls the right side air bellows and the second hold valve 59 controls the left side air bellows. The conduit 61 from the right hand hold valve 58 to its respective bellows is connected via choke 62a to the conduit 63 from the second hold valve 59 to its respective bellows. Transducer 42 is connected to this conduit to provide an electronic control signal, which in turn is connected via choke 62b to the conduit 63 and via choke 62c to the conduit 61. To facilitate lift axle control, the third set of bellows on the left and right is controlled by the lift axle control described in detail below.

The lift axle control 3/2 solenoid 64 is also connected to the common rail 51, an output of which solenoid 64 pilots the liftaxle air pilot valve 65 which is also in fluid communication with the common rail 51. A further output of the lift axle solenoid is connected to the exhaust conduit 66 of the EBS solenoids as described below. An output of the valve 65 is connected via conduit 63 with the air suspension bellows 2L and 2R and a further output of the valve 65 is connected to first and second lift bellows 25 to provide the lift axle control. The valve 65 is also connected to the exhaust conduit 66 which leads to exhaust port 3.

The common rail 51 is provided with an overflow valve 67, which is biased against the lift axle control and levelling control so that the braking function is always given priority with respect to available air pressure.

The EBS functionality is provided by first and second hold solenoids 68, 69 and load exhaust valve 71 and back up valve 70. The back up valve 70 is connected to the main brake pressure inlet 4, which is also provided with a pressure transducer P4. The back up valve 70 is further connected to each of the hold solenoids 68, 69 via conduit 72 and to the load exhaust solenoid 71. The load exhaust solenoid is provided with connections to the common rail 51 and the conduit 66. The hold solenoid 68 is connected to the pilot port of the relay valve 52 and the solenoid 69 is connected to the pilot port of the relay valve 53.

The relay valve 52 is connected to the exhaust 3 and also to the three brake delivery ports 21 and is provided with a pressure transducer 21 in that conduit to the ports 21 to measure the delivery pressure. The relay valve 53 is connected to a separate exhaust 3 and via conduit 73 to the three brake delivery ports 22. A pressure transducer P22 is provided to measure the pressure in the conduit to the ports 22. A test port 29 is also provided here to provide a test port for measuring brake pressure.

The emergency relay park valve 74 is also in fluid communication with conduit 73 and is connected by a check valve 75 to the common rail 51. The valve 74 provides the delivery pressure to the spring park brake ports 23 and is piloted by park brake / emergency pressure input 43.

The valve is provided with four electrical connectors. The first connector is a 7 pin ISO 7638 connector to the tractor. The pins are provided with the following functions: 1 battery; 2 ignition; 3 electronic ground; 4 valve ground; 5 warning light; 6 CAN high; 7 CAN low.

The second connector is a 12 pin connector for auxiliary function input output (AuxIO). With this connector, pins are assigned to the stop light, a 5V CAN bus to enable communication to components such as a Trailer Info-Module such as the Applicant's TIM or Haldex's Info-centre ®; pins are further assigned to the power supply and the remaining pins are available for AuxIO.

The third connector is a 6 pin connector with pins for power and CAN connections to 3^{rd} and 4^{th} modulators if they are required by the trailer builder and wheel speed sensors. The fourth connector is a further 6 pin connector with pins assigned to an analogue to digital convertor and AuxIO controls for auxiliary functions.

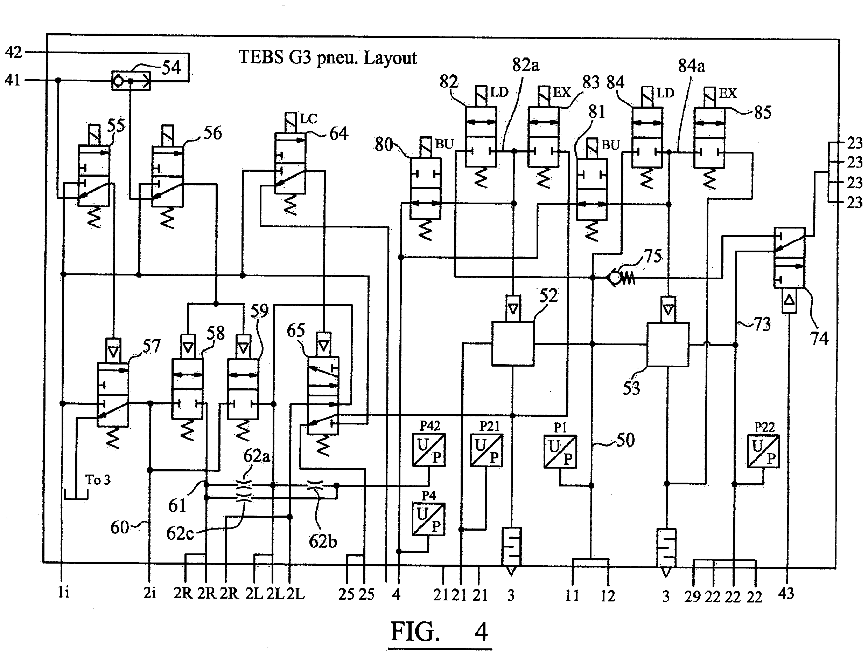

Figure 4 shows a second variant of the valve having 6 solenoids for brake control.

The functionality of the electronic level control and the lift axle control as well as the park valve is essentially the same as described with respect to Figure 3 where the same parts are labelled with the same reference numbers.

The arrangement of the braking solenoids will now be described in greater detail. As with the embodiment of Figure 3, the valve arrangement of Figure 4 is provided with a pneumatic input via the ports 11 and 12, which are connected to the trailer reservoir (not shown) to enable air flow into the valve. The inlet ports 11 and 12 are connected to conduit 50. The conduit 50 is also pneumatically connected to EBS relay valves 52, 53 and well as pressure transducer P1, which measures the pressure on the inlet conduit to provide a control signal for the valve control electronics.

The conduit 50 branches and provides the inlet pressure to first and second load solenoids 82, 84, which solenoids are pneumatically connected to a respective first and second exhaust solenoid 83, 85 via respective conduits 82a and 84a. The first exhaust solenoid is exhausted via a common path with the relay valve 52 and the auxiliary functions. The second solenoid is exhausted via a common path with the relay valve 53.

Two back up valves 80 and 81 are provided, each of which back up valves is connected to the main brake pressure inlet 4, which is also provided with a pressure transducer P4. The back up valves 80, 81 are further connected to conduits 82a and 84a, each of which is also in pneumatic connection with the control ports of the respective relay valves 52 and 53.

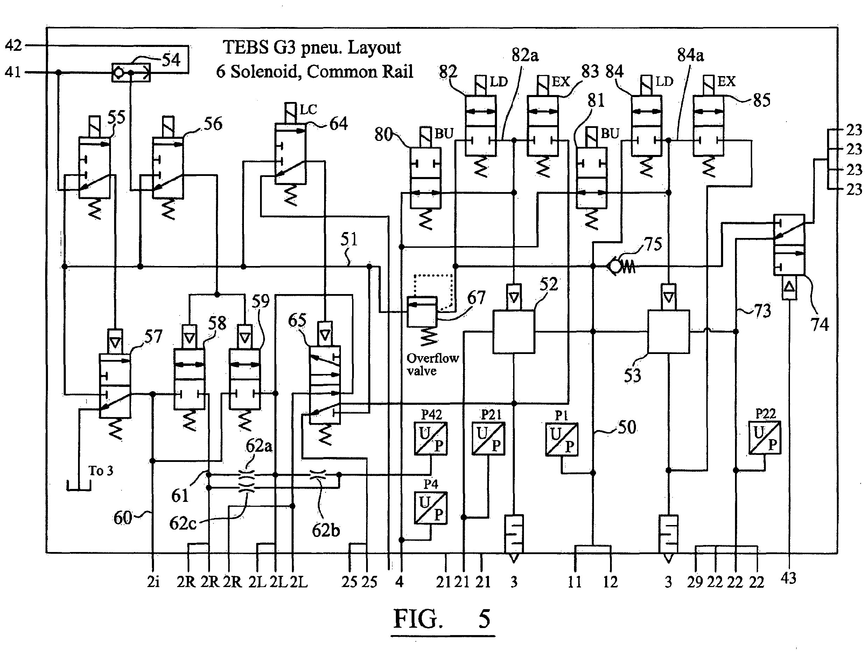

Figure 5 shows an alternative to the arrangement of Figure 4. As with the embodiment of Figure 3 and Figure 4, the valve arrangement of Figure 5 is provided with a pneumatic input via the ports 11 and 12, which are connected to the trailer reservoir (not shown) to enable air flow into the valve. The inlet ports 11 and 12 are connected to conduit 50. The conduit 50 is also pneumatically connected to EBS relay valves 52, 53 and well as pressure transducer P1, which measures the pressure on the inlet conduit to provide a control signal for the valve control electronics.

The conduit 50 leads to the common rail 51 and provides the inlet pressure to first and second load solenoids 82, 84, which solenoids are pneumatically connected to a respective first and second exhaust solenoid 83, 85 via respective conduits 82a and 84a. The first exhaust solenoid is exhausted via a common path with the relay valve 52 and the auxiliary functions. The second solenoid is exhausted via a common path with the relay valve 53.

Two back up valves 80 and 81 are provided, each of which back up valves is connected to the main brake pressure inlet 4, which is also provided with a pressure transducer P4. The back up valves 80, 81 are further connected to conduits 82a and 84a, each of which is also in pneumatic connection with the control ports of the respective relay valves 52 and 53.

The levelling control is provided with an air suspension raise input 41 in pneumatic connection with a first solenoid 55 and an air suspension lower input 42 which is in pneumatic connection with the raise input 41 and the first solenoid 55 via a check valve 54. The check valve 54 is also connected with a second solenoid 56. The raise and lower solenoids are connected with the common rail 51. The first solenoid 55 is connected to the pilot input of the levelling exhaust valve 57, which exhaust is further in pneumatic connection with the common rail 51.

The second valve 56 is connected to the control ports of first levelling hold valve 58 and second levelling hold valve 59. The first and second levelling hold valves are connected to a conduit 60 in communication with port 2i, which is the suspension control by an external valve for two point levelling control. The conduit 60 is connected to the exhaust valve 57 to enable the hold valves 58 and 59 to be exhausted via valve 57.

Each of the hold valves is connected to a respective two air suspension bellows on the trailer 2R and 2L. Thus the first hold valve 58 controls the right side air bellows and the second hold valve 59 controls the left side air bellows. The conduit 61 from the right hand hold valve 58 to its respective bellows is connected via choke 62a to the conduit 63 from the second hold valve 59 to its respective bellows. Transducer 42 is connected to this conduit to provide an electronic control signal, which in turn is connected via choke 62b to the conduit 63 and via choke 62c to the conduit 61. To facilitate lift axle control, the third set of bellows on the left and right is controlled by the lift axle control described in detail below.

The lift axle control 3/2 solenoid 64 is also connected to the common rail 51, an output of which solenoid 64 pilots the liftaxle air pilot valve 65 which is also in fluid communication with the common rail 51. A further output of the lift axle solenoid is connected to the exhaust conduit 66 of the EBS solenoids as described below. An output of the valve 65 is connected via conduit 63 with the air suspension bellows 2L and 2R and a further output of the valve 65 is connected to first and second lift bellows 25 to provide the lift axle control. The valve 65 is also connected to the exhaust conduit 66 which leads to exhaust port 3.

The common rail 51 is provided with an overflow valve 67, which is biased against the lift axle control and levelling control so that the braking function is always given priority with respect to available air pressure.

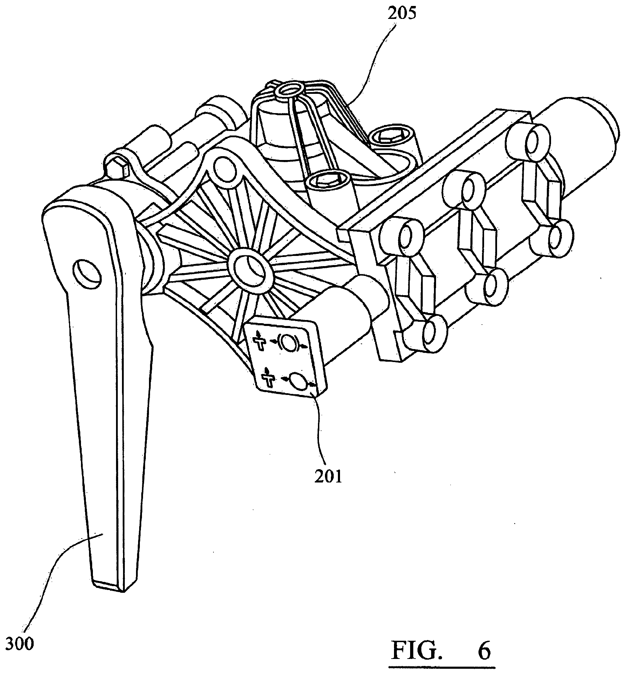

Figure 6 shows schematically the external controls of the park valve arrangement comprising the pneumatic valve element 205 as described above together with an actuating handle 300 for actuating the raising and lowering of the trailer height and a single push button 201 for actuating the park control. The push button 201 has three positions: drive, park and manoeuvring. The pushed in position is the park position, the pulled out position is the manoeuvring position and the middle position between these is the drive position.

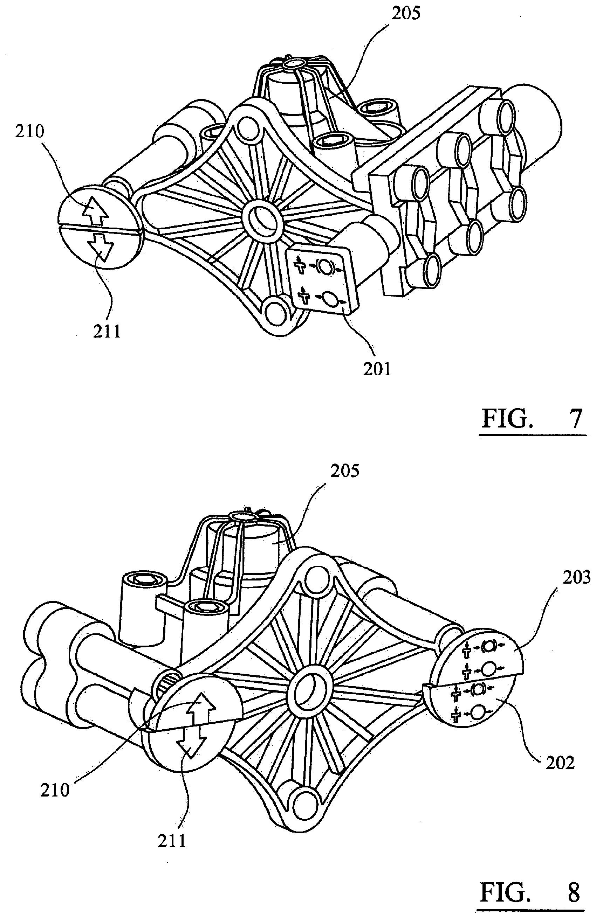

Figure 7 shows a second embodiment, schematically the external controls of the park valve arrangement comprising the pneumatic valve element 205 as described above together with two buttons 210, 211 for actuating the raising and lowering of the trailer height and a single push button 201 for actuating the park control. The push button 201 has three positions: drive, park and manoeuvring. The pushed in position is the park position, the pulled out position is the manoeuvring position and the middle position between these is the drive position.

Figure 8 shows a third embodiment, schematically the external controls of the park valve arrangement comprising the pneumatic valve element 205 as described above together with two buttons 210, 211 for actuating the raising and lowering of the trailer height and a single push button 201 for actuating the park control. The push button 202 has two positions: drive and park. The push button 203 and has two positions: drive and manoeuvring.

The invention overcomes the difficulty presented by the original solution and ensures the safety and the cost effectiveness of the system are equally provisioned.

## Claims

1. A brake valve arrangement for use in a trailer electronic braking system (200) comprising a pressure control module controllable by an electronic control unit, having a main supply of pneumatic pressure (102) and a reservoir (208), **characterised in that** the valve arrangement comprises a park valve (205) having pneumatic connections to the main supply (102), reservoir (208) and pressure control module (200), which valve is provided with a first actuator (205) for actuating the raising and lowering of the trailer height and a second actuator (201) for controlling parking and manoeuvring functions.

2. A brake valve arrangement according to Claim 1, wherein the second actuator comprises a button (201) having a first position in which the trailer is parked and a second position in which the trailer is manoeuvrable.

3. A brake valve according to Claim 2, wherein the button (201) is depressed in the first position and pulled out in the second position.

4. A brake valve according to Claim 2 or Claim 3, wherein the button (201) is provided with a third position, in which third position the trailer can be driven.

5. A brake valve according to any one of Claims 1 to 4, wherein the first actuator (205) is a lever.

6. A brake valve according to any one of Claims 1 to 5, wherein air pressure from the supply line moves the button (201) from the park position to the drive position.

## Patentansprüche

1. Eine Bremsventilbaugruppe zur Verwendung in einem elektronischen Anhängerbremssystem (200), umfassend ein Drucksteuermodul, das durch eine elektronische Steuereinheit steuerbar ist und eine Hauptzufuhr pneumatischen Drucks (102) und ein Reservoir (208) einschließt, **dadurch gekennzeichnet, dass** die Ventilbaugruppe ein Parkbremsventil (205) mit pneumatischen Anschlüssen an die Hauptzufuhr (102), das Reservoir (208) und das Drucksteuermodul (200) umfasst, wobei das Ventil mit einem ersten Stellantrieb (205) zum Anheben und Absenken der Anhängerhöhe und einem zweiten Stellantrieb (201) zur Steuerung der Park- und Manövrierfunktionen ausgestattet ist.

2. Eine Bremsventilbaugruppe nach Anspruch 1, wobei der zweite Stellantrieb einen Knopf (201) mit einer ersten Position umfasst, in der der Anhänger geparkt ist, und einer zweiten Position, in der der Anhänger manövrierfähig ist.

3. Ein Bremsventil nach Anspruch 2, wobei der Knopf (201) in der ersten Position gedrückt und in der zweiten Position herausgezogen ist.

4. Ein Bremsventil nach Anspruch 2 oder Anspruch 3, wobei der Knopf (201) eine dritte Position besitzt und in dieser dritten Position gefahren werden kann.

5. Ein Bremsventil nach einem der Ansprüche 1 bis 4, wobei der erste Stellantrieb (205) ein Hebel ist.

6. Ein Bremsventil nach einem der Ansprüche 1 bis 5, wobei der Luftdruck von der Zufuhrleitung den Knopf (201) aus der Parkposition in die Fahrposition bewegt.

## Revendications

1. Agencement de soupape de frein destiné à être utilisé dans un système de freinage électronique de remorque (200) comprenant un module de commande de pression pouvant être commandé par un bloc de commande électronique, ayant une alimentation principale en pression pneumatique (102) et un réservoir (208), **caractérisé en ce que** l'agencement de soupape comprend une soupape de stationnement (205) ayant des connexions pneumatiques à l'alimentation principale (102), au réservoir (208) et au module de commande de pression (200), laquelle soupape est pourvue d'un premier actionneur (205) pour actionner le soulèvement et l'abaissement de la hauteur de remorque et un second actionneur (201) pour commander des fonctions de stationnement et de manœuvre.

2. Agencement de soupape de frein selon la revendication 1, dans lequel le second actionneur comprend un bouton (201) ayant une première position dans laquelle la remorque est stationnée et une deuxième position dans laquelle la remorque peut être manœuvrée.

3. Soupape de frein selon la revendication 2, dans laquelle le bouton (201) est enfoncé dans la première position et ressorti dans la deuxième position.

4. Soupape de frein selon la revendication 2 ou la revendication 3, dans laquelle le bouton (201) est pourvu d'une troisième position, dans laquelle troisième position la remorque peut être conduite.

5. Soupape de frein selon l'une quelconque des revendications 1 à 4, dans laquelle le premier actionneur (205) est un levier.

6. Soupape de frein selon l'une quelconque des revendications 1 à 5, dans laquelle de la pression d'air provenant de la ligne d'alimentation déplace le bouton (201) de la position de stationnement à la position de conduite.
